# EUROPÄISCHE PATENTSCHRIFT

(11) **EP 1 970 232 B1**
(45) Veröffentlichungstag und Bekanntmachung des Hinweises auf die Patenterteilung: **09.03.2011**
(21) Anmeldenummer: 08004599.0
(22) Anmeldetag: 12.03.2008
(51) Int. Cl.: B60H 1/22

(54) **Verfahren zum Betreiben eines Fahrzeugheizsystems in einer Startphase**
Method for operating a heating system for a motor vehicle in the start phase
Procédé destiné au fonctionnement d'un système de chauffage de véhicule en phase de démarrage

(30) Priorität: 16.03.2007 DE 102007012800
(43) Veröffentlichungstag der Anmeldung: 17.09.2008
(73) Patentinhaber: J. Eberspächer GmbH & Co. KG, 73730 Esslingen (DE)
(72) Erfinder: Knies, Tobias, 73240 Wendlingen (DE); Epple, Jürgen, 72135 Dettenhausen (DE); Pfister, Wolfgang, 73732 Esslingen (DE); Köberle, Christoph, 70736 Fellbach (DE)
(74) Vertreter: Ruttensperger, Bernhard

(56) Entgegenhaltungen:
- WO-A-2004/007923
- GB-A- 2 394 003
- NEUMEYER F: "INNOVATIVES STANDHEIZUNGSKONZEPT THERMO TOP" ATZ AUTOMOBILTECHNISCHE ZEITSCHRIFT, VIEWEG PUBLISHING, WIESBADEN, DE, Bd. 94, Nr. 2, 1. Februar 1992 (1992-02-01), Seiten 94-98, XP000246532 ISSN: 0001-2785

## Beschreibung

Die vorliegende Erfindung betrifft ein Verfahren zum Betreiben eines Fahrzeugheizsystems in einer Startphase. Derartige Fahrzeugheizsysteme umfassen ein brennstoffbetriebenes Fahrzeugheizgerät, das in einem Brennerbereich durch Verbrennung eines Gemisches aus Brennstoff und Verbrennungsluft Wärme erzeugt und diese in einem Wärmetauscherbereich auf ein zu erwärmendes flüssiges Medium überträgt. Dieses flüssige Medium kann beispielsweise das in einem Strömungskreislauf zirkulierende Kühlmittel einer Brennkraftmaschine sein, wobei der Wärmetauscherbereich dann derart in den Strömungskreislauf eingebunden ist, dass das flüssige Medium über den Strömungskreislauf zu dem Wärmetauscherbereich hin geführt wird und auch vom Wärmetauscherbereich wieder weggeführt wird.

Die Bewegung des flüssigen Mediumss durch den Strömungskreislauf hindurch wird durch eine Mediumförderanordnung generiert, die ein Förderorgan in dem Strömungskreislauf aufweist sowie einen durch Anlegen einer elektrischen Spannung zu betreibenden Antrieb für das Förderorgan. Da zum Schutz des elektrisch zu betreibenden Antriebs dieser im Allgemeinen nicht innerhalb desjenigen Volumenbereichs angeordnet ist, in welchem auch das flüssige Medium strömt, erfolgt die Kopplung zwischen dem Förderorgan und dem Antrieb allgemein durch eine Magnetkupplung. Eine derartige Magnetkupplung ermöglicht es, ein Antriebsdrehmoment von dem Antrieb auf das Förderorgan zu übertragen, ohne dass eine Drehdurchführung durch eine Wandung des Strömungskreislaufs erforderlich wäre.

Die verschiedenen zum Betreiben des Fahrzeugheizgeräts zu aktivierenden bzw. anzusteuernden Systemkomponenten stehen unter der Ansteuerung einer Ansteuervorrichtung, welche insbesondere auch den Antrieb für das Förderorgan ansteuert, um das Medium durch den Strömungskreislauf und den Wärmetauscherbereich hindurch zu bewegen.

Bei derartigen Fahrzeugheizsystemen dient also das brennstoffbetriebene Fahrzeugheizgerät unter anderem auch dazu, ein flüssiges Medium zu erwärmen, wobei ein derartiges flüssiges Medium eine vergleichsweise stark von dessen Temperatur abhängige Viskosität aufweist. Je kälter ein derartiges flüssiges Medium ist, desto zähflüssiger ist es und desto größer ist der Widerstand, gegen welchen das Förderorgan arbeiten muss, um dieses flüssige Medium zur Bewegung durch den Strömungskreislauf hindurch anzutreiben. Dies kann bei sehr niedrigen Temperaturen, beispielsweise von unter -20°C, dazu führen, dass beim Anlegen einer elektrischen Spannung an den Antrieb die Magnetkupplung nicht dazu in der Lage ist, das zum Drehen des Förderorgans erforderliche Drehmoment von dem Antrieb auf das Förderorgan zu übertragen. Das heißt, die Magnetkupplung geht aufgrund des vergleichsweise großen Widerstands, der auf das Förderorgan einwirkt, in einen Schlupfzustand über.

Aus der Zeitschrift ATZ Automobiltechnische Zeitschrift 94, Februar 1992, ist als nächster Stand der Technik ein Verfahren zum Betreiben eines Fahrzeugheizsystems bekannt, bei welchem eine mit Magnetkupplung ausgestaltete Umwälzpumpe das einen Fahrzeugmotor durchströmende Kühlmittel fördert. Bei der Inbetriebnahme des Fahrzeugheizsystems wird mit der Aktivierung eines Verdampferbrenners auch die Umwälzpumpe in Betrieb gesetzt, um zunächst die Kühfflüssigkeit mit der vollen Strömungsrate durch den Motor zu fördern und diesen möglichst gleichmäßig zu erwärmen. Bei Erreichen einer Umschalttemperatur von etwa 20 °C setzt eine Förderleistungsregelung der Umwälzpumpe ein, bei welcher deren Förderleistung allmählich erhöht wird, um zunächst durch Absenken der Durchflussmenge die Temperatur des Kühlwassers schneller auf etwa 60 bis 70 °C zu erhöhen.

Die WO 2004/007923 A1 offenbart eine Kühlmittelpumpe, bei welcher zwischen einem Antrieb und einem Förderorgan eine Flüssigkeitsreibungskupplung und parallel dazu eine Magnetkupplung wirken. Bei der Inbetriebnahme wird zunächst die Magnetkupplung deaktiviert gehalten und der in der Flüssigkeitsreibungskupplung zwangsweise auftretende Schlupf dazu genutzt, das Förderorgan mit geringerer Drehzahl zu betreiben. Ist eine größere Fördermenge erforderlich, wird die Magnetkupplung erregt und somit eingerückt, so dass das Förderorgan schlupffrei angetrieben wird.

Es ist die Aufgabe der vorliegenden Erfindung, ein Verfahren zum Betreiben eines Fahrzeugheizsystems in einer Startphase bereitzustellen, mit welchem in zuverlässiger Art und Weise die Aktivierung der verschiedenen Systembereiche erreicht werden kann.

Erfindungsgemäß wird diese Aufgabe gelöst durch ein Verfahren zum Betreiben eines Fahrzeugheizsystems in einer Startphase, welches Fahrzeugheizsystem umfasst:
- ein brennstoffbetriebenes Fahrzeugheizgerät mit einem Brennerbereich und einem Wärmetauscherbereich zur Übertragung von im Brennerbereich bereitgestellter Wärme auf ein zu erwärmendes flüssiges Medium,
- einen zu dem Wärmetauscherbereich hin und von dem Wärmetauscherbereich weg führenden Strömungskreislauf für das Medium,
- eine Mediumförderanordnung mit einem Förderorgan in dem Ströund einem durch Anlegen einer elektrischen Spannung zu betreibenden Antrieb für das Förderorgan, wobei das Förderorgan mit dem Antrieb durch eine Magnetkupplung in Antriebsverbindung steht,
- eine Ansteuervorrichtung zum Ansteuern des Antriebs für das Förderorgan zum Bewegen des Mediums durch den Strömungskreislauf und den Wärmetauscherbereich hindurch,
   bei welchem Verfahren
   bei einer Maßnahme a) die Ansteuervorrichtung den Antrieb für das Förderorgan wenigstens einmal aktiviert und darauf folgend deaktiviert, bevor in einen kontinuierlichen Antriebszustand übergegangen wird, oder/und
   bei einer Maßnahme b) die Ansteuervorrichtung den Antrieb für das Förderorgan zur Inbetriebnahme desselben derart ansteuert, dass dessen Antriebsdrehmoment allmählich erhöht wird,
   oder/und
   bei einer Maßnahme c) die Ansteuervorrichtung den Antrieb für das Förderorgan bezüglich der Aktivierung des Brennerbereichs mit Verzögerung aktiviert.

Bei dem erfindungsgemäßen Verfahren wird durch das Bereitstellen verschiedener Maßnahmen, die entweder einzeln oder aber auch in beliebiger Kombination ergriffen werden können, dafür gesorgt, dass auch bei vergleichsweise großem auf das Förderorgan einwirkenden Widerstand und entsprechend starker Belastung der Magnetkupplung, wie dies bei sehr niedrigen Umgebungstemperaturen und mithin entsprechend niedrigen Temperaturen des flüssigen Mediums der Fall sein kann, undefinierte Schlupfzustände im Bereich der Magnetkupplung und entsprechen undefinierte Arbeitszustände des Förderorgans, die möglicherweise über eine längere Zeitdauer hinweg anhalten können, vermieden werden.

So führt das ggf. mehrfach durchgeführte Anschalten und Abschalten des Antriebs in der Startphase dazu, dass, begleitet durch eine allmähliche Erwärmung der in der Nähe des Brennerbereichs vorhandenen Systembereiche, insbesondere auch des dort positionierten flüssigen Mediums, dann, wenn beim Aktivieren des Antriebs für das Förderorgan die Magnetkupplung in einen Schlupfzustand gebracht worden ist, durch das darauf folgende Abschalten des Antriebs der Schlupfzustand wieder aufgehoben wird und mit dem erneuten Aktivieren des Antriebs bei dann etwas wärmerem und mithin weniger viskosevm flüssigen Medium erneut der Versuch unternommen wird, das Förderorgan ohne durchrutschende Magnetkupplung in Betrieb zu setzen. Durch das wiederholte An- und Abschalten des Antriebs für das Förderorgan wird also erforderlichenfalls mehrfach der möglicherweise vorhandene Schlupfzustand wieder beendet und versucht, in einen normalen Antriebszustand ohne Schlupf zu gelangen.

Auch das gemäß der Maßnahme b) vorgesehene allmähliche Erhöhen des Antriebsdrehmoments, also beispielsweise das Bereitstellen eines Drehmomentgradienten, der eine bestimmte Schwelle nicht überschreitet, wird es möglich, ohne Überlastung der Magnetkupplung entsprechend allmählich die Drehzahl des Förderorgans anzuheben.

Auch das Verzögern der Aktivierung des Antriebs hinsichtlich der Aktivierung des Brennerbereichs hat sich als vorteilhaft erwiesen. Da bei bereits arbeitendem Brennerbereich Wärme erzeugt wird, die durch Wärmeleitung auch auf den im Allgemeinen in der Nähe des Brennerbereichs positionierten Antrieb bzw. die Magnetkupplung übertragen wird, wird durch Erwärmung dieser Systembereiche dafür gesorgt, dass ein Durchrutschen der Magnetkupplung vermieden werden kann.

Bei der Maßnahme b) kann das allmähliche Erhöhen des Antriebsdrehmoments dadurch erlangt werden, dass die an den Antrieb angelegte Betriebsspannung allmählich erhöht wird. Dies kann beispielsweise dadurch erfolgen, dass zumindest in der Startphase die Betriebsspannung in getakteter Weise angelegt wird und das dabei vorgesehene Tastverhältnis zunimmt. Ein zunehmendes Tastverhältnis bedeutet eine zunehmende mittlere Spannung, die an den Antrieb angelegt wird, so dass entsprechend der zunehmenden mittleren Spannung auch dessen Antriebsdrehmoment allmählich zunimmt.

Die Maßnahme a) kann das wiederholte Aktivieren und Deaktivieren des Antriebs umfassen, so dass durch ein mehrfaches An- und Abschalten die Wahrscheinlichkeit, dass bei irgend einem der Wiederholungsvorgänge die Magnetkupplung aufgrund einer dann bereits ausreichenden Erwärmung des flüssigen Mediums nicht mehr durchrutscht, gesteigert wird.

Die Wiederholungsrate, also die Rate des alternierenden Aktivierens und Deaktivierens kann im Wesentlichen konstant sein, kann in der Startphase jedoch auch zunehmen, so dass mit fortschreitender Startphase auch öfter pro Zeiteinheit versucht wird, die Magnetkupplung in einen nicht rutschenden und das Antriebsdrehmoment vom Antrieb vollständig übertragenden Kopplungszustand zu bringen.

Wie vorangehend bereits dargelegt, besteht die Gefahr des Durchrutschens der Magnetkupplung vor allem dann, wenn das zur Bewegung anzutreibende flüssige Medium eine vergleichsweise hohe Viskosität aufweist, was im Allgemeinen dann der Fall sein wird, wenn sehr niedrige Temperaturen vorliegen. Es wird daher vorgeschlagen, dass am Beginn der Startphase eine mit der Temperatur des Mediums in Zusammenhang stehende Temperaturgröße erfasst wird und dass die Maßnahmen a) oder/und b) oder/und c) dann ergriffen wird, wenn die Temperaturgröße eine vorbestimmte Referenztemperaturgröße nicht übersteigt. Es sei hier darauf hingewiesen, dass die Temperaturgröße beispielsweise die Temperatur des zu bewegenden flüssigen Mediums selbst sein kann, oder aber auch eine andere Temperatur, wie z. B. die Umgebungstemperatur, wiedergeben kann. Bei vergleichsweise niedriger, also unter einer bestimmten Schwelle liegender Umgebungstemperatur kann vor allem dann, wenn das Fahrzeugheizsystem für eine längere Zeit nicht betrieben worden ist, angenommen werden, dass auch das zu bewegende flüssige Medium sehr kalt ist und entsprechend eine so hohe Viskosität aufweisen wird, dass die Gefahr des Durchrutschens der Magnetkupplung besteht.

Ein weiteres zusätzlich oder ggf. alternativ heranzuziehendes Kriterium für das Aktivieren einer oder mehrerer der Maßnahmen a), b) und c) kann dadurch gesetzt werden, dass am Beginn der Startphase die Leistungsaufnahme des Antriebs für das Förderorgan nach dessen Aktivierung überprüft wird und dass die Maßnahme a) oder/und b) oder/und c) dann ergriffen wird, wenn die Leistungsaufnahme eine vorbestimmte Referenzleistungsaufnahme nicht übersteigt. Dabei wird also am Beginn der Startphase zunächst eine Spannung an den Antrieb angelegt und auch durch Verknüpfung mit dem fließenden elektrischen Strom die elektrische Leistungsaufnahme des Antriebs überprüft. Ist die Magnetkupplung in einem Schlupfzustand, bedeutet dies, dass nur ein vergleichsweise geringes Drehmoment vom Antrieb auf das Förderorgan übertragen wird, was eine entsprechend geringe bzw. im Vergleich zu einem normalen Antriebszustand zu geringe elektrische Leistungsaufnahme bedeutet. Liegt also die Leistungsaufnahme unter einer vorbestimmten Referenzleistungsaufnahme, kann darauf geschlossen werden, dass der Antrieb nicht in dem normal zu erwartenden Ausmaß belastet wird, was weiter den Schluss zulässt, dass die Magnetkupplung in einem Schlupfzustand ist. Daraufhin kann dann eine oder mehrere der vorangehend angegebenen Maßnahmen ergriffen werden, wobei beispielsweise die Maßnahme a) dadurch ergriffen bzw. fortgesetzt werden kann, dass nach dem zum Überprüfen der Leistungsaufnahme erfolgten Aktivieren des Antriebs dieser zunächst wieder deaktiviert wird und darauf folgend ggf. noch einmal aktiviert und wieder deaktiviert wird, bevor in den normalen Antriebszustand übergegangen wird. Bei der Maßnahme b) kann nach dem Deaktivieren des Antriebs die Spannung dann wieder allmählich erhöht werden, entweder in getakteter oder kontinuierlicher Art und Weise. Eine Heranziehung der Maßnahme c) kann nach dem Überprüfen der Leistungsaufnahme und dem Feststellen, dass diese die Referenzleistungsaufnahme nicht übersteigt, das Aktivieren des Antriebs wieder eingestellt werden und eine vorbestimmte längere Zeitdauer zugewartet werden, bevor erneut der Antrieb aktiviert wird.

Ein weiteres Kriterium, das das Aktivieren einer oder mehrerer der Maßnahmen a), b) bzw. c) auslösen kann, umfasst die Berücksichtigung der elektromotorischen Kraft des Antriebs für das Förderorgan. Es wurde festgestellt, dass dann, wenn die Antriebsverbindung zwischen diesem Antrieb und dem Förderorgan unterbrochen ist, also die Magnetkupplung in einem Rutschzustand ist, die elektromotorische Kraft deutlich über einem Wert liegt, wie er bei vollständigem Übertrag des Antriebsdrehmoments vorliegen würde. Es wird daher weiter vorgeschlagen, dass am Beginn der Startphase die elektromotorische Kraft des Antriebs für das Förderorgan ermittelt wird und dass die Maßnahme a) oder/und b) oder/und c) dann ergriffen wird, wenn die elektromotorische Kraft über einem Referenzwert liegt.

Die vorliegende Erfindung wird nachfolgend mit Bezug auf die beiliegenden Zeichnungen detailliert beschrieben. Es zeigt:
- Fig. 1: eine Prinzipdarstellung eines Fahrzeugheizsystems;
- Fig. 2: den zeitlichen Verlauf der an einen Antrieb für ein Förderorgan angelegten elektrischen Spannung in einer Startphase;
- Fig. 3: eine der Fig. 2 entsprechende Darstellung mit alternativem Spannungsverlauf;
- Fig. 4: eine der Fig. 2 entsprechende Darstellung mit alternativem Spannungsverlauf;
- Fig. 5: ein Diagramm, das den Verlauf einer elektromotorischen Kraft über der Temperatur des Kühlmittels darstellt.

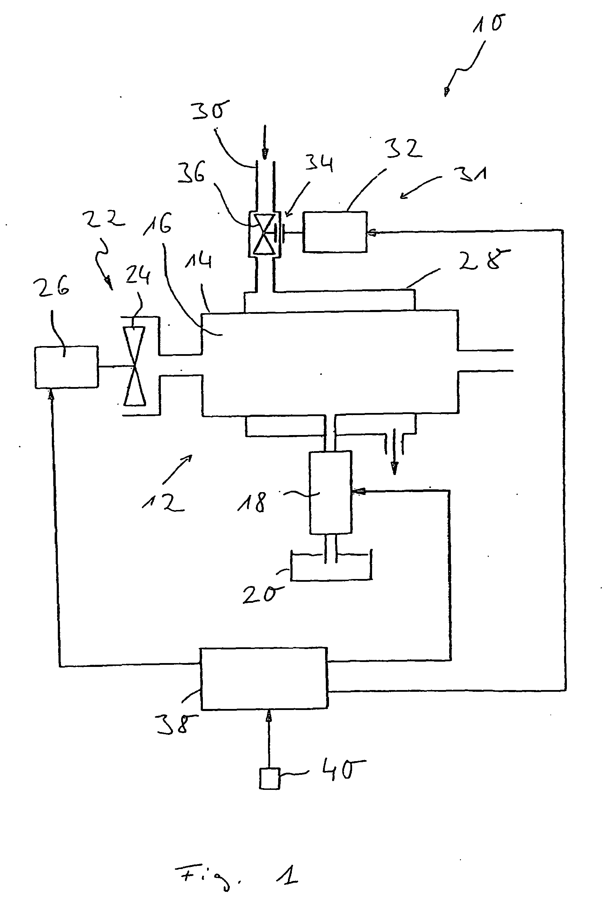

Ein Fahrzeugheizsystem 10, bei welchem die erfindungsgemäße Vorgehensweise inplementiert werden kann, ist in Fig. 1 dargestellt. Das Fahrzeugheizsystem 10 umfasst als wesentlichen Systembereich ein Fahrzeugheizgerät 12 mit einem brennstoffbetriebenen Brennerbereich 14 mit einer in einem Brennkammergehäuse gebildeten Brennkammer 16. In die Brennkammer 16 wird durch eine Brennstoffförderanordnung 18, also beispielsweise eine Dosierpumpe oder dergleichen, flüssiger Brennstoff aus einem Brennstoffreservoir 20 eingeleitet. Durch eine Verbrennungsluftförderanordnung 22, die ein Förderrad 24 und einen elektromotorischen Antrieb 26 dafür umfasst, wird Verbrennungsluft in die Brennkammer 16 geleitet, um zusammen mit dem eingeleiteten Brennstoff ein Gemisch aus Luft und Brennstoff zu erzeugen und durch dessen Verbrennung Wärme bereitzustellen. In einem allgemein mit 28 bezeichneten Wärmetauscherbereich wird die im Brennerbereich 12 generierte Wärme auf ein zu erwärmendes flüssiges Medium übertragen, das in einem Strömungskreislauf 30 zirkuliert. Dieser Strömungskreislauf 30 kann beispielsweise der Kühlmittelkreislauf einer Brennkraftmaschine sein, so dass das im Strömungskreislauf 30 zirkulierende flüssige Medium das Kühlmittel einer Brennkraftmaschine ist.

Um das flüssige Medium zur Strömung in dem Strömungskreislauf 30 anzutreiben, ist eine Mediumförderanordnung 31 mit einem elektromotorischen Antrieb 32 vorgesehen, welcher über eine Magnetkupplung 34 ein innerhalb des Strömungskreislaufs 30 angeordnetes Förderorgan 36, also beispielsweise Förderrad, zur Drehung antreibt. Durch die Kopplung über die Magnetkupplung 34 wird es möglich, eine Drehmomentübertragungsverbindung zwischen dem elektromotorischen Antrieb 32 und dem Förderorgan 36 zu generieren, ohne eine hinsichtlich der Dichtigkeit kritische Drehdurchführung für eine Antriebswelle bereitstellen zu müssen.

Die verschiedenen zu aktivierenden bzw. zu deaktivierenden Systembereiche des Fahrzeugheizsystems 10 stehen unter der Ansteuerung einer Ansteuervorrichtung 38. Diese generiert Ansteuersignale bzw. legt an die verschiedenen Systembereiche Ansteuersignale, beispielsweise in Form geeigneter Spannungen, an, um den erwünschten Betrieb zu erhalten. Dabei kann die Ansteuervorrichtung 30 ihr zur Verfügung gestellte Informationen, beispielsweise die Information eines Temperatursensors 40, verwerten. Dieser Temperatursensor 40 kann beispielsweise im Strömungskreislauf 30 angeordnet sein, so dass das durch den Temperatursensor 40 gelieferte Signal die Temperatur des im Strömungskreislauf 30 vorhandenen flüssigen Mediums wiederspiegelt. Es ist selbstverständlich, dass weitere Sensoren bzw. Temperatursensoren Informationen liefern können, welche die Ansteuervorrichtung 38 zum Betreiben des Fahrzeugheizsystems nutzt.

Vor allem dann, wenn das Fahrzeugheizsystem 10 dazu genutzt werden soll, die darin generierte Wärme zum möglichst schnellen Erwärmen der Brennkraftmaschine eines Fahrzeugs auf das auch durch die Brennkraftmaschine zirkulierende Kühlmittel zu übertragen, was vor allem dann sinnvoll ist, wenn aufgrund sehr niedriger Außentemperaturen die Zeitdauer für die Selbsterwärmung der Brennkraftmaschine unverhältnismäßig lange wäre und somit durch ein brennstoffbetriebenes Fahrzeugheizgerät 12 die Zeitdauer, in welcher aufgrund ungünstiger thermischer Verhältnisse eine Brennkraftmaschine sehr hohe Schadstoffanteile ausstößt, verkürzt werden kann, wird das im Strömungskreislauf 30 vorhandene flüssige Medium vergleichsweise zähflüssig sein, also eine hohe Viskosität aufweisen. Diese hohe Viskosität des flüssigen Mediums führt dazu, dass bei dem Versuch, dieses zur Zirkulation durch den Strömungskreislauf 30 anzutreiben, das Förderorgan 30 bzw. der elektromotorische Antrieb 32 gegen einen sehr hohen Strömungswiderstand bzw. Bewegungswiderstand arbeiten muss. Dies kann zu einer Überlastung der Magnetkupplung 34 führen und im Extremfall sogar dazu führen, dass diese durchzurutschen beginnt. Um dies zu verhindern bzw. einen derartigen Zustand möglichst schnell zu beenden, werden nachfolgend verschiedene Maßnahmen beschrieben, die erfindungsgemäß in einer Startphase des Fahrzeugheizsystems ergriffen werden können.

Es sei hierzu zunächst angenommen, dass die Startphase des Fahrzeugheizsystems dann beginnt, wenn ein entsprechender Startbefehl in der Ansteuervorrichtung 38 generiert wird bzw. dieser zugeführt wird. Dieser Startbefehl kann beispielsweise durch das Drehen eines Zündschlüssels bzw. das Betätigen eines Zündknopfs erzeugt werden, wodurch auch die Brennkraftmaschine in Betrieb gesetzt wird. In dieser Phase kann zunächst durch Auswertung des Signals des Temperatursensors 40 überprüft werden, ob aufgrund der Temperatur des flüssigen Mediums, also des Kühlmittels der Brennkraftmaschine, grundsätzlich die Gefahr besteht, dass bei Aktivierung des elektromotorischen Antriebs 32 die Magnetkupplung 34 in einen Schlupfzustand übergeht. Dies kann beispielsweise dadurch erfolgen, dass die durch das Signal des Temperatursensors 40 repräsentierte Temperaturgröße, also beispielsweise direkt die Temperatur des flüssigen Mediums, mit einer Referenztemperaturgröße verglichen wird. Diese kann beispielsweise bei -20°C liegen. Ist die Temperatur des Kühlmittels über dieser Referenztemperaturgröße, so ist dies ein Hinweis darauf, dass die Gefahr des Durchrutschens der Magnetkupplung 34 praktisch nicht besteht, so dass der elektromotorische Antrieb 32 in normaler Art und Weise, also beispielsweise durch Anlegen einer vorbestimmten Spannung, aktiviert werden kann. Liegt die vom Temperatursensor 40 bereitgestellte Temperaturgröße jedoch unter der Referenztemperaturgröße, so ist dies ein Hinweis darauf, dass aufgrund der dann vorhandenen vergleichsweise hohen Viskosität des flüssigen Mediums die Gefahr einer Überlastung der Magnetkupplung 34 besteht. In diesem Falle kann dann die Aktivierung des elektromotorischen Antriebs 32 in der nachfolgend beschriebenen Art und Weise erfolgen.

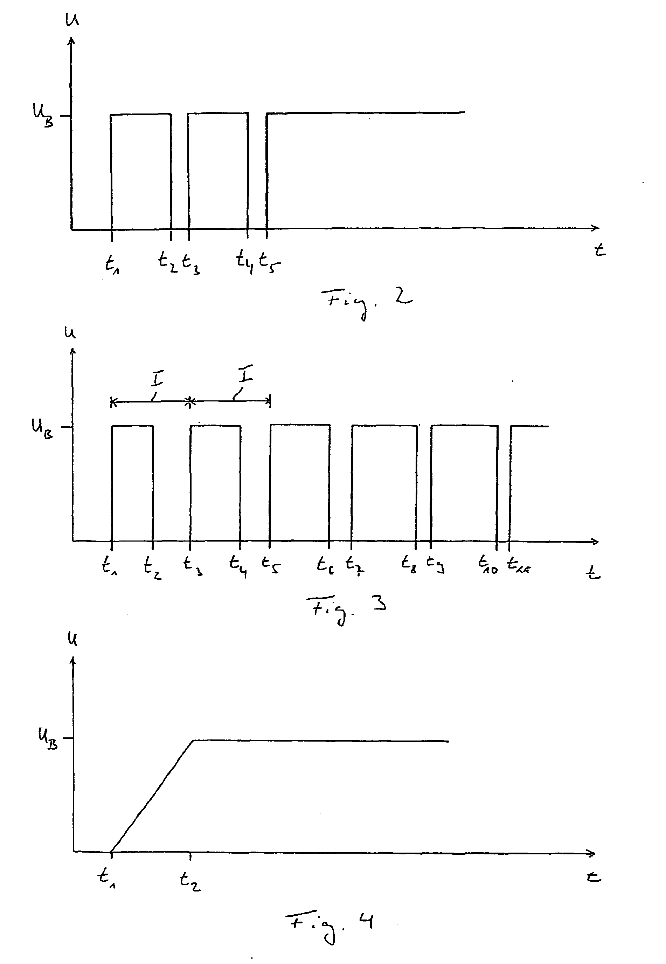

Eine erste Möglichkeit, den elektromotorischen Antrieb 32 für das Förderorgan 36 so in Betrieb zu nehmen, dass die Gefahr vor allem eines länger anhaltenden Schlupfzustands der Magnetkupplung 34 vermieden wird, ist in Fig. 2 dargestellt. Diese Fig. 2 zeigt über der Zeit t aufgetragen die an den elektromotorischen Antrieb 32 angelegte Spannung U. Man erkennt, dass grundsätzlich mit einer vorgegebenen Betriebsspannung U_{B} gearbeitet wird, die beispielsweise die in einem Bordspannungssystem zur Verfügung gestellte Spannung von 12V oder 24V sein kann.

In der Fig. 2 wird also am Beginn der Startphase, beispielsweise nachdem bereits die Auswertung des Signals des Temperatursensors 40 durchgeführt wurde und erkannt wurde, dass die Temperatur des flüssigen Mediums zu nieder ist, zu einem Zeitpunkt t₁ die Betriebsspannung U_{B} angelegt und zwar über eine vorbestimmte Zeitdauer hinweg. Diese vorbestimmte Zeitdauer endet zum Zeitpunkt t₂ und kann im Bereich von einigen Sekunden bis zu einer Minute liegen. Nach Ablauf dieser vorbestimmten Zeitdauer wird der elektromotorische Antrieb 32 wieder deaktiviert, und in einem Intervall zwischen den Zeitpunkten t₂ und t₃ wird keine Spannung angelegt. Dieses Deaktivierungszeitintervall kann ebenfalls im Bereich von einigen Sekunden liegen, beispielsweise 1 bis 5 Sekunden betragen. Darauf folgend wird zum Zeitpunkt t₃ die Betriebsspannung U_{B} wieder angelegt und wieder über die gleiche Zeitdauer hinweg gehalten, bis zu einem Zeitpunkt t₄ der elektromotorische Antrieb wieder deaktiviert wird. Nach erneutem Ablauf des Deaktivierungszeitintervalls zum Zeitpunkt t₅ wird dann die Betriebsspannung U_{B} wieder angelegt und auch beibehalten, so dass nunmehr der elektromotorische Antrieb in seinem normalen Betriebszustand verbleibt.

Es hat sich gezeigt, dass durch die Inbetriebnahme des Fahrzeugheizgeräts 12 auch dann, wenn bei noch nicht aktiviertem Antrieb 32 die Zirkulation des flüssigen Mediums durch den Strömungskreislauf 30 noch nicht generiert ist, durch Wärmestrahlung und Wärmekonvektion insbesondere das im Bereich des Förderorgans 36, das im Allgemeinen in einem sehr nahe am Fahrzeugheizgerät 12 liegenden Bereich des Strömungskreislaufs 30 angeordnet ist, zumindest geringfügig erwärmt wird und somit eine bereits etwas geminderte Viskosität aufweisen wird. Hat also das erste Aktivieren des Antriebs 32 noch zu einem Durchrutschen der Magnetkupplung 34 geführt, so wird durch das nachfolgende Deaktivieren des Antriebs 32 dieser Schlupfzustand der Magnetkupplung 34 wieder aufgehoben. Durch die bereits etwas angehobene Temperatur des flüssigen Mediums wird beim nächsten Versuch, die Zirkulation des flüssigen Mediums aufzunehmen, also beim nächsten Aktivieren des Antriebs 32, möglicherweise die Magnetkupplung 34 nicht mehr in den Schlupfzustand gelangen und mithin das Förderorgan 36 antreiben.

Dies bedeutet also, dass durch das Wiederholte An- und Abschalten des Antriebs 32 dann, wenn tatsächlich die Magnetkupplung 34 zunächst noch in den Schlupfzustand übergehen sollte, dieser nach jeder Deaktivierungsphase die Möglichkeit gegeben wird, durch das Aufheben des Schlupfzustands und die allmählich fortschreitende Erwärmung des flüssigen Mediums das Antriebsdrehmoment vom Antrieb 32 auf das Förderorgan 36 zu übertragen.

Dabei ist es vorteilhaft, in dieser Phase des alternierenden Aktivierens und Deaktivierens die Zeitdauer, während welcher der elektromotorische Antrieb 32 aktiviert ist, also die Intervalle t₁ - t₂ und t₃ - t₄ in Fig. 2, größer zu wählen, als die Zeitdauer, während welcher der elektromotorische Antrieb 32 nicht aktiviert ist, also die Zeitintervalle t₂ - t₃ und t₄ - t₅ in Fig. 2. Auch ist es möglich, die Wiederholungsrate des alternierenden An- und Abschaltens des Antriebs 32 zu erhöhen, so dass mit fortschreitender Startphase die Wechsel zwischen An- und Auszustand schneller folgen.

Eine alternative Vorgehensweise ist in Fig. 3 gezeigt. Auch hier wird zum Zeitpunkt t₁, beispielsweise nachdem in der vorangehend beschriebenen Art und Weise durch Auswertung des Signals des Temperatursensors 40 erkannt wurde, dass die Gefahr des Durchrutschens der Magnetkupplung 34 besteht, die im Bordspannungssystem bereitgestellte Betriebsspannung U_{B} an den elektromotorischen Antrieb 32 angelegt und dieser während eines Zeitintervalls t₁ - t₂ erregt bzw. aktiviert. Zum Zeitpunkt t₂ wird dieses Erregen beendet bzw. der elektromotorische Antrieb 32 deaktiviert. Dieses Deaktivieren dauert bis zu einem Zeitpunkt t₃ an. Zu diesem Zeitpunkt t₃ ist seit dem Beginn des erstmaligen Aktivierens ein Taktintervall 1 abgelaufen. Diese nacheinander dann folgenden Taktintervalle 1 haben eine vorbestimmte und im Allgemeinen konstante Länge und definieren durch die Zeitanteile, während welcher in den Taktintervallen I der elektromotorische Antrieb 32 erregt ist, also die Betriebsspannung U_{B} angelegt ist, und die Zeitanteile, während welchen keine Betriebsspannung angelegt ist, das Tastverhältnis, mit welchem der elektromotorische Antrieb 32 erregt wird. Man erkennt bei der Vorgehensweise der Fig. 3, dass dieses Tastverhältnis mit fortschreitender Zeit zunimmt, also die Zeitintervalle t₁ - t₂, t₃ - t₄, t₅ - t₆ und t₇ - t₈ in den einzelnen Taktintervallen I zunimmt.

Auch hier ist also in der Startphase dafür gesorgt, dass durch alternierendes Aktivieren und Deaktivieren des elektromotorischen Antriebs 32 die Magnetkupplung 34 schneller in einen Zustand gelagt, in welchem sie das Drehmoment übertragen kann. Durch das Arbeiten mit einem vorbestimmten Tastverhältnis wird hier tatsächlich dafür gesorgt, dass entsprechend dem Tastverhältnis eine mittlere Spannung an dem elektromotorischen Antrieb 32 anliegt, die entsprechend dem jeweils vorhandenen Tastverhältnis unter der Betriebsspannung U_{B} liegen wird. Durch den allmählichen Anstieg des Tastverhältnisses steigt auch die mittlere anliegende Spannung an, so dass auch eine entsprechende allmähliche Erhöhung des Antriebsdrehmoments des elektromotorischen Antriebs 32 auftreten wird. Eine derartige allmähliche Erhöhung des Antriebsdrehmoments führt dazu, dass auch das über die Magnetkupplung 34 zu übertragende Drehmoment nur alllmählich ansteigt und somit das Förderorgan 36 langsam in Drehung versetzt wird. Das Tastverhältnis bzw. die Änderung des Tastverhältnisses kann dabei so gewählt werden, dass auch unter den Bedingungen vergleichsweise hoher Viskosität des zu bewegenden flüssigen Mediums die Gefahr des Durchrutschens der Magnetkupplung 34 ausgeschlossen werden kann.

Man erkennt in Fig. 3 weiter, dass beispielsweise ab dem Zeitpunkt t₇ mit einem im Wesentlichen konstanten Tastverhältnis gearbeitet wird. Dies bedeutet, dass auch in dem normalen Betriebszustand der elektromotorische Antrieb 32 durch das getaktete Anlegen der Betriebsspannung U_{B} betrieben werden kann. Selbstverständlich ist es hier möglich, ähnlich wie dies in Fig. 2 gezeigt ist, beim Übergang in den normalen Betriebszustand mit einer kontinuierlich anlegenden Betriebsspannung zu arbeiten.

Eine weitere alternative Vorgehensweise ist in Fig. 4 gezeigt. Man erkennt in Fig. 4, dass zum Zeitpunkt t₁ nicht die beispielsweise im Bordspannungssystem bereitgestellte Betriebsspannung U_{B} spontan angelegt wird, sondern dass die an den elektromotorischen Antrieb 32 angelegte Spannung allmählich beispielsweise mit einer konstanten Zunahme erhöht wird. Diese Erhöhung kann fortgesetzt werden, bis zu einem Zeitpunkt t₂ die Betriebsspannung U_{B} vollständig anliegt, wobei der Zeitraum zwischen dem Zeitpunkt t₁ und t₂, in welchem die Spannung allmählich erhöht wird, sich über 10 bis 30 Sekunden hinweg erstrecken kann. Auch hier wird also durch das Allmähliche Erhöhen der am elektromotorischen Antrieb 32 anliegenden Spannung ein entsprechend allmählicher Anstieg des von diesem abgegebenen Antriebsdrehmoments erzeugt, so dass auch das Förderorgan 36 nur mit langsamem Anstieg der Drehzahl in Bewegung versetzt wird und somit eine Überlastung der Magnetkupplung 34 vermieden werden kann.

Es sei hier darauf hingewiesen, dass selbstverständlich auch bei den in den Fig. 2 und 3 veranschaulichten Vorgehensweisen jeweils die Betriebsspannung nicht spontan, also mit voller Höhe angelegt werden kann, sondern in rampenartiger Weise auf ihren Maximalwert erhöht werden kann, um einen stoßartigen Anstieg des Antriebsdrehmoments des elektromotorischen Antriebs 32 zu vermeiden.

Eine weitere in den Figuren nicht veranschaulichte Vorgehensweise kann darin bestehen, dass nach dem Generieren des Startbefehls zunächst das Fahrzeugheizgerät 12 in Betrieb gesetzt wird, um durch die darin gestartete und ablaufende Verbrennung Wärme zu erzeugen. Zu diesem Zeitpunkt wird jedoch der elektromotorische Antrieb 32 noch nicht aktiviert, was bedeutet, dass zunächst auch nicht versucht wird, das flüssige Medium im Strömungskreislauf 30 in Bewegung zu versetzen. Durch die im Fahrzeugheizgerät 12 ablaufende Verbrennung wird dieses sich erwärmen, wobei diese Wärme durch Wärmestrahlung und Wärmeleitung auch auf die im Bereich des Fahrzeugheizgeräts 12 positionierten Komponenten übertragen wird. Das heißt, auch das in dem an den Wärmetauscherbereich 28 angrenzenden Bereich des Strömungskreislaufs 30 vorhande flüssige Medium wird sich erwärmen. Mit einer vorbestimmten Verzögerung nach dem Inbetriebsetzen des Fahrzeugheizgeräts 12, die im Bereich von 30 Sekunden bis einigen Minuten liegen kann, wird dann auch der elektromotorische Antrieb 32 in Betrieb gesetzt, wobei dann angenommen werden kann, dass durch die bereits erfolgte Erwärmung die Gefahr eines Durchrutschens der Magnetkupplung 34 nicht mehr gegeben ist. Hier kann aus Gründen der Vorsicht der elektromotorische Antrieb 32 dann auch mit einer der in den Fig. 2 bis 4 gezeigten Möglichkeiten in Betrieb genommen werden.

Wie vorangehend dargelegt, werden zum möglichst schnellen Erweichen eines normalen Betriebszustands des Fahrzeugheizsystems 10 die erfindungsgemäß vorgesehenen Sicherheitsmaßnahmen allgemein nur dann ergriffen, wenn aufgrund der thermischen Bedingungen die Gefahr des Durchrutschens der Magnetkupplung 34 besteht. Da jedoch auch bei vergleichsweise niedrigen Umgebungstemperaturen, also beispielsweise auch dann, wenn eine Referenztemperaturgröße nicht erreicht oder überschritten wird, grundsätzlich der Zustand auftreten kann bzw. könnte, dass bei Erregung des elektromotorischen Antriebs 32 die Magnetkupplung 34 nicht in einen Schlupfzustand übergeht, kann erfindungsgemäß vorgesehen sein, dass bei Aktivierung des elektromotorischen Antriebs 32, also Anlegen einer Spannung an diesen, die elektrische Leistungsaufnahme des elektromotorischen Antriebs 32 überprüft wird. Hier ist zu berücksichtigen, dass die elektrische Leistungsaufnahme dann, wenn die Rutschkupplung 34 nicht in einem Schlupfzustand ist und somit das Förderorgan 36 zum Bewegen des flüssigen Mediums im Strömungskreislauf 30 in Drehung versetzt wird, größer ist, als dann, wenn die Rutschkupplung 34 in einem Schlupfzustand liegt. Mit der Überwachung der elektrischen Leistungsaufnahme kann also erkannt werden, ob das Antriebsdrehmoment des elektromotorischen Antriebs 32 auf das Förderorgan 36 übertragen wird, oder ob die Magnetkupplung 34 in einem Schlupfzustand ist. Hierzu kann die durch Auswertung der angelegten Spannung, ggf. mittleren Spannung, und des fließenden elektrischen Stroms ermittelte elektrische Leistungsaufnahme mit einer Referenzleistungsaufnahme verglichen werden. Liegt die Leistungsaufnahme bei bzw. über der Referenzleistungsaufnahme, so kann darauf geschlossen werden, dass die Magnetkupplung 34 des Antriebsdrehmoments des elektromotorischen Antriebs 32 vollständig überträgt und mithin das Förderorgan 36 korrekt zur Drehung angetrieben wird. Weitere Sicherheitsmaßnahmen sind dann nicht erforderlich und das Aktivieren des elektromotorischen Antriebs 32 kann in der für den normalen Betriebszustand vorgesehenen Art und Weise vorgenommen werden. Liegt jedoch die Leistungsaufnahme unter der Referenzleistungsaufnahme bzw. erreicht die Referenzleistungsaufnahme nicht, was darauf hindeutet, dass die Magnetkupplung 34 in einem Schlupfzustand ist, so können die vorangehend beschriebenen Sicherheitsmaßnahmen ergriffen werden. Bei den in den Fig. 2 und 3 gezeigten Vorgehensweisen kann dies bedeuten, dass also zunächst mit der Aktivierung zum Zeitpunkt t₁ die Spannung an den elektromotorischen Antrieb 32 angelegt wird, die Leistungsaufnahme ausgewertet wird und dann unmittelbar erkannt wird, dass die Magketkupplung 34 durchrutscht. Es kann dann zu dem jeweiligen Zeitpunkt t₂ die Aktivierung wieder beendet werden und in der vorangehend beschriebenen bzw. in den Fig. 2 und 3 dargestellten Art und Weise fortgefahren werden. Das heißt, bei der getakteten Inbetriebnahme können das erste Anlegen der Betriebsspannung U_{B} zum Zeitpunkt t₁ und die darauf folgende Phase, während welcher die Betriebsspannung angelegt ist, genutzt werden, um die Leistungsaufnahme zu überprüfen, deutet diese auf einen korrekten Betrieb der Magnetkupplung 34 hin, kann die Betriebsspannung U_{B} fortdauernd angelegt bleiben bzw. kann mit dem für den normalen Betriebszustand vorgesehenen Tastverhältnis weiter gearbeitet werden. Bei unter der Referenzleistungaufnahme liegender Leistungsaufnahme kann dann in den getakteten Betrieb der beschriebenen Sicherheitsmaßnahmen übergegangen werden.

Bei der in Fig. 4 dargestellten Maßnahme mit allmählichen Erhöhung der angelegten Spannung kann, bevor dieses allmähliche Erhöhen durchgeführt wird, bei impulsartigem Anlegen der Spannung die Überprüfung der Leistungsaufnahme erfolgen. Wird die Referenzleistungsaufnahme nicht erreicht, kann die Spannung wieder abgeschaltet werden und dann zum Zeitpunkt t₁ die rampenartige Erhöhung erfolgen. Entsprechendes gilt auch für die vorangehend beschriebene Verzögerung beim Aktivieren des elektromotorischen Antriebs 32. Wird bei einer impulsartigen Spannungserhöhung erkannt, dass die Magnetkupplung 34 in einem Schlupfzustand ist, wird der elektromotorische Antrieb 32 deaktiviert und das vorbestimmte Zeitintervall abgewartet, bis dieser erneut in Betrieb gesetzt wird.

Es sei darauf hingewiesen, dass die vorangehend beschriebenen Maßnahmen des Überprüfens der Temperatur des flüssigen Mediums und des Überprüfens der Leitungsaufnahme des elektromotorischen Antriebs 32 zusammen vorgesehen sein können, so dass beispielsweise zunächst anhand der Temperatur festgestellt wird, ob überhaupt ein kritischer Zustand vorliegen könnte, und dann durch Überprüfung der Leistungsaufnahme verifiziert wird, ob tatsächlich die Magnetkupplung 34 in einem Schlupfzustand ist. Ist bei dieser Vorgehensweise die Temperatur ausreichend hoch, so braucht dann auch die Überprüfung der Leistungsaufnahme nicht durchgeführt werden. Grundsätzlich ist es jedoch auch möglich, ohne Temperaturauswertung bei jeder Inbetriebnahme des Fahrzeugheizsystems 10 die Leistungsaufnahme des elektromotorischen Antriebs 32 zu überprüfen, um dann zu entscheiden, ob die Durchführung von Sicherheitsmaßnahmen erforderlich ist oder nicht.

Eine weitere Möglichkeit der Bestimmung, ob eine korrekte Drehmomentübertragungsverbindung zwischen dem elektromotorischen Antrieb und dem Förderorgan besteht, umfasst die Berücksichtigung der elektromotorischen Kraft des Antriebs 32. Wird dieser Antrieb 32 beispielsweise dadurch erregt, dass die im Bordspannungsnetz zur Verfügung stehende Spannung als konstante Spannung bzw. Gleichspannung an diesen angelegt wird, so kann durch kurzzeitiges Unterbrechen des Anlegens dieser Spannung bei noch weiter drehendem Antrieb die elektromotorische Kraft als die in dieser Phase dann an den Anschlüssen des Antriebs 32 gemessene Spannung, also im Wesentlichen eine Generatorspannung, bestimmt werden. Es wurde festgestellt, dass diese elektromotorische Kraft dann größer ist, wenn nicht das vollständige Antriebsdrehmoment vom Antrieb 32 auf das Förderorgan 36 übertragen wird, also die Magnetkupplung 34 in einem Schlupfzustand ist.

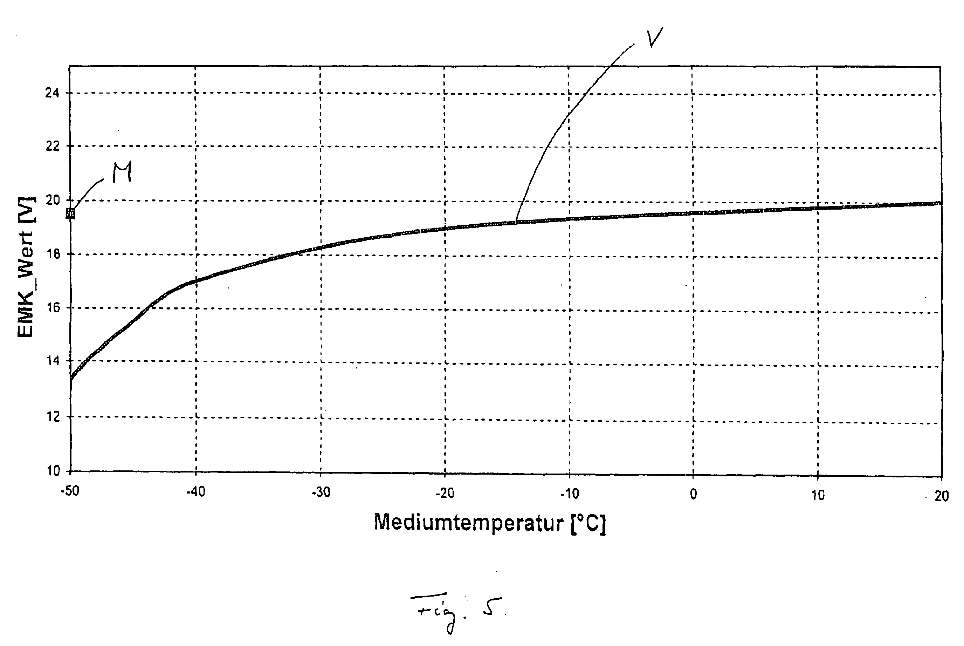

Dies nutzt die vorliegende Erfindung aus, um in der Startphase durch Ermittlung dieser elektromotorischen Kraft des Antriebs 32 darauf schließen zu können, ob ein Schlupfzustand vorliegt oder nicht. Die Fig. 5 zeigt hierzu über der Temperatur des Kühlmittels aufgetragen eine Kurve V, welche den Verlauf der elektromotorischen Kraft wiedergibt, und zwar für den Fall, dass als Antriebsspannung eine Gleichspannung von 21 Volt an den Antrieb 32 angelegt wird. Dabei repräsentiert die Kurve V den Zustand einer vollständigen Drehmomentübertragung über die Magnetkupplung 34. Der Abfall der elektromotorischen Kraft bei sinkenden Temperaturen ist darauf zurückzuführen, dass auf Grund der mit sinkenden Temperaturen zunehmenden Fähigkeit des Kühlmittels bei nicht anliegender Antriebsspannung das Förderorgan 36 und somit auch der damit fest verkoppelte Rotor des Antriebs 32 deutlich stärker gebremst werden, also mit geringerer Drehzahl gedreht werden und mithin auch nur eine geringere Spannung als Generatorspannung induzieren können. Für den Temperaturwert -50°C ist ein Messwert M eingetragen, der die elektromotorische Kraft im Schlupfzustand der Magnetkupplung 34 repräsentiert. Man erkennt einen deutlich über dem bei nicht schlupfender Magnetkupplung 34 erhaltenen Wert liegenden Wert der elektromotorischen Kraft. Wird also beispielsweise die Kurve V oder eine entsprechende Werteschar als Referenz verwendet, so kann durch Vergleichen der jeweils ermittelten elektromotorischen Kraft mit dieser Referenz festgestellt werden, ob die Magnetkupplung 34 in einem Schlupfzustand ist oder nicht. Dabei kann beispielsweise auch die jeweilige Temperatur berücksichtigt werden, da, wie man erkennt, die Kurve V deutlich temperaturabhängig ist. Es kann also unter Berücksichtigung der jeweils vorliegenden Temperatur ein entsprechender Referenzwert für die elektromotorische Kraft vorgegeben werden und dann der tatsächlich ermittelte Wert der elektromotorischen Kraft mit diesem Referenzwert verglichen werden. Liegt die elektromotorische Kraft über dem Referenzwert, so ist dies ein Zeichen für ein Durchrutschen der Magnetkupplung 34, was das Ergreifen einer oder mehrerer der vorangehend beschriebenen Maßnahmen auslösen kann. Dies bedeutet, dass die Erregung des Antriebs 32 beendet werden kann und die Startprozedur dann so wie vorangehend beschrieben fortgesetzt werden kann. Liegt die elektromotorische Kraft bei dem Referenzwert bzw. innerhalb eines gewissen zulässigen Abweichungsbereichs bezüglich dieses Referenzwertes, so kann auf einen korrekten Drehmomentübertragungszustand der Magnetkupplung 34 geschlossen werden und die Startprozedur in normaler Weise fortgesetzt werden. Weiter ist es selbstverständlich möglich, den Referenzwert für die elektromotorische Kraft so festzulegen, dass er für alle Temperaturen genutzt werden kann, bei welchen Probleme hinsichtlich der Drehmomentübertragung über die Magnetkupplung 34 zu erwarten sind. So kann beispielsweise für den Temperaturbereich unter -20°C ein Referenzwert vorgegeben werden, der so ausgewählt wird, dass sichergestellt ist, dass immer dann, wenn die Magnetkupplung 34 im Schlupfzustand ist, der dann vorhandene Wert der elektromotorischen Kraft über diesem Referenzwert liegt. Für höhere Temperatur kann dann beispielsweise ein anderer Referenzwert herangezogen werden bzw. auf die Vorgabe eines Referenzwertes verzichtet werden, da bei derartigen höheren Temperaturen, also beispielsweise Temperaturen von über -20°C, selbstverständlich abhängig vom jeweiligen System, mit dem Durchrutschen nicht gerechnet werden muss und mithin eine entsprechende Überprüfung der elektromotorischen Kraft dann auch nicht zu erfolgen hat.

## Patentansprüche

1. Verfahren zum Betreiben eines Fahrzeugheizsystems in einer Start-phase, welches Fahrzeugheizsystern umfasst:
- ein brennstoffbetriebenes Fahrzeugheizgerät (12) mit einem Brennerbereich (14) und einem Wärmetauscherbereich (28) zur Übertragung von im Brennerbereich (14) bereitgestellter Wärme auf ein zu erwärmendes flüssiges Medium,
- einen zu dem Wärmetauscherbereich (28) hin und von dem Wärmetauscherbereich (28) weg führenden Strömungskreislauf (30) für das Medium,
- eine Mediumförderanordnung (31) mit einem Förderorgan (36) in dem Strömungskreistauf (30) und einem durch Anlegen einer elektrischen Spannung zu betreibenden Antrieb (32) für das Förderorgan (36), wobei das Förderorgan (36) mit dem Antrieb durch eine Magnetkupplung (34) in Antriebsverbindung steht,
- eine Ansteuervorrichtung (38) zum Ansteuern des Antriebs (32) für das Förderorgan (36) zum Bewegen des Mediums durch den Strömungskreistauf (30) und den Wärmetauscherbereich (28) hindurch, **gekennzeichnet dadurch, dass**
bei dem Verfahren
bei einer Maßnahme a) die Ansteuervorrichtung (38) den Antrieb (32) für das Förderorgan (36) wenigstens einmal aktiviert und darauf folgend deaktiviert, bevor in einen kontinuierlichen Antriebszustand übergegangen wird,
oder/und
bei einer Maßnahme b) die Ansteuervorrichtung (38) den Antrieb (32) für das Förderorgan (36) zurInbetriebnahme desselben derart ansteuert, dass dessen Antriebsdrehmoment allmählich erhöht wird,
oder/und
bei einer Maßnahme c) die Ansteuervorrichtung (38) den Antrieb (32) für das Förderorgan (36) bezüglich der Aktivierung des Brennerbereichs (14) mit Verzögerung aktiviert.

2. Verfahren nach Anspruch 1,
**dadurch gekennzeichnet, dass** die Maßnhame b) das allmähliche Erhöhen der Spannung an dem Antrieb (32) umfaßt

3. Verfahren nach Anspruch 2,
**dadurch gekennzeichnet, dass** wenigstens in der Startphase die Spannung mit zunehmendem Tastverhältnis angelegt wird.

4. Verfahren nach einem der Ansprüche 1 bis 3,
**dadurch gekennzeichnet, dass** die Maßnahme a) das wiederholte Aktivieren und Deaktivieren des Antriebs umfasst.

5. Verfahren nach Anspruch 4,
**dadurch gekennzeichnet, dass** die Wiederholungsrate im Wesentlichen konstant ist.

6. Verfahren nach Anspruch 4,
**dadurch gekennzeichnet, dass** die Wiederholungsrate in der Startphase zunimmt.

7. Verfahren nach einem der Ansprüche 1 bis 6,
**dadurch gekennzeichnet, dass** am Beginn der Startphase eine mit der Temperatur des Mediums in Zusammenhang stehende Temperaturgröße erfasst wird und dass die Maßnahmen a) oder/und b) oder/und c) dann ergriffen wird, wenn die Temperaturgröße eine vorbestimmte Referenztemperaturgröße nicht übersteigt.

8. Verfahren nach einem der Ansprüche 1 bis 7,
**dadurch gekennzeichnet, dass** am Beginn der Startphase die Leistungsaufnahme des Antriebs (32) für das Förderorgan (36) nach dessen Aktivierung überprüft wird und dass die Maßnahme a) oder/und b) oder/und c) dann ergriffen wird, wenn die Leistungsaufnahme eine vorbestimmte Referenzleistungsaufnahme nicht übersteigt.

9. Verfahren nach einem der Ansprüche 1 bis 8,
**dadurch gekennzeichnet, dass** am Beginn der Startphase die elektromotorische Kraft des Antriebs (32) für das Förderorgan (36) ermittelt wird und dass die Maßnahme a) oder/und b) oder/und c) dann ergriffen wird, wenn die elektromotorische Kraft über einem Referenzwert liegt.

## Claims

1. A method for operating a vehicle heating system in a starting phase, said vehicle heating system comprising:
- a fuel operated vehicle heating device (12) with a burner section (14) and a heat exchanger section (28) for transferring heat provided in said burner section (14) to a fluid medium to be heated,
- a flow circuit (30) for said medium leading towards said heat exchanger section (28) and away from said heat exchanger section (28),
- a medium conveying arrangement (31) with a conveying member (36) in a flow circuit (30) and a drive element (32) for the conveying member (36) to be operated by applying an electric voltage, the conveying member (36) being in drive communication with the drive element via a magnetic clutch (34),
- an actuation device (38) for actuating the drive element (32) for the conveying member (36) for moving the medium through the flow circuit (30) and the heat exchanger section (28),
**characterized in that** in said method
in a measure a) the actuation device (38) activates the drive element (32) for the conveying member (36) at least once and deactivates it subsequently prior to passing to a continuous drive state,
or/and
in a measure b) the actuation device (38) activates the drive element (32) for the conveying member (36) for initial operation of the latter in such a way that its drive torque is slowly increased,
or/and
in a measure c) the actuation device (38) activates the drive element (32) for the conveying member (36) with a certain delay in relation to the activation of the burner section (14).

2. A method according to claim 1,
**characterized in** measure b) comprising the gradual increase of the voltage at the drive element (32).

3. A method according to claim 2,
**characterized in** the voltage being applied with an increasing duty cycle, at least during the starting phase.

4. A method according to one of claims 1 to 3,
**characterized in** measure a) comprising the repeated activation and deactivation of the drive element.

5. A method according to claim 4,
**characterized in** the repetition rate being substantially constant.

6. A method according to claim 4,
**characterized in** the repetition rate increasing during the starting phase.

7. A method according to one of claims 1 to 6,
**characterized in that** at the beginning of said starting phase a temperature variable being associated to the temperature of the medium is detected and **in that** said measure a) or/and b) or/and c) is taken when the temperature variable does not exceed a predefined reference temperature variable.

8. A method according to one of claims 1 to 7,
**characterized in** the at the beginning of the starting phase the performance of said drive element (32) for said conveying member (36) is checked after the actuation of the latter and **in that** said measure a) or/and b) or/and c) is taken when said performance does not exceed a predefined reference performance.

9. A method according to one of claims 1 to 8,
**characterized in** the at the beginning of the starting phase the electromotive force of said drive element (32) for said conveying member (36) is determined and **in that** said measure a) or/and b) or/and c) is taken when the electromotive force exceeds a reference value.

## Revendications

1. Une méthode pour opérer un système de chauffage pour un véhicule pendant une phase initiale, le système de chauffage pour un véhicule comprenant :
- un appareil de chauffage pour un véhicule (12) avec une section de brûleur (14) et une section déchangeur de chaleur (28) pour transférer de la chaleur prévue dans la section de brûleur (14) à un médium liquide étant à chauffer,
- un circuit de courant (30) pour le médium menant envers la section déchangeur de chaleur (28) et s'éloignant de la section déchangeur de chaleur (28),
- un arrangement de transmission du médium (31) avec un élément de transmission (36) dans le circuit de courant (30) et un moteur (32) pour l'élément de transmission (36) à opérer par l'application d'une tension électrique, l'élément de transmission (36) étant en communication d'entraînement avec le moteur par embrayage magnétique (34),
- un dispositif de commande (38) pour commander le moteur (32) pour l'élément de transmission (36) pour transporter le médium à travers le circuit de courant (30) et la section d'échangeur de chaleur (28), **caractérisée en ce que** au cours de la méthode au sein dune mesure a) le dispositif de commande (38) active le moteur (32) pour l'élément de transmission (36) au moins une fois et le désactive ensuite avant de passer à un état d'activation continue,
ou/et
au sein d'une mesure b) le dispositif de commande (38) active le moteur (32) pour l'élément de transmission (36) pour opérer ce dernier dune manière que son couple d'entraînement soit augmenté graduellement,
ou/et
au sein d'une mesure c) le dispositif de commande (38) active le moteur (32) pour l'élément de transmission (36) avec du retard en rapport à l'activation de la section de brûleur (14).

2. La méthode selon la revendication 1,
**caractérisée par** la méthode b) comprenant l'augmentation graduelle de la tension au moteur (32).

3. La méthode selon la revendication 2,
**caractérisée par** au moins pendant la phase initiale la tension étant appliquée avec un rapport impulsion/pause croissant.

4. La méthode selon une des revendications 1 à 3,
**caractérisée par** la mesure a) comprenant l'activation et la désactivation répétées du moteur.

5. La méthode selon la revendication 4,
**caractérisée par** le taux de répétition restant substantiellement constant.

6. La méthode selon la revendication 4,
**caractérisée par** le taux de répétition augmentant pendant la phase initiale.

7. La méthode selon une des revendications 1 à 6,
**caractérisée par** une variable de température associée à la température du médium étant saisie au début de la phase initiale et par la mesure a) ou/et b) ou/et c) étant prise lorsque la variable de température ne dépasse pas une variable de température de référence prédéfinie.

8. La méthode selon une des revendications 1 à 7,
**caractérisée par** la performance du moteur (32) pour l'élément de transmission (36) étant vérifiée au début de la phase initiale après son activation et par la mesure a) ou/et b) ou/et c) étant prise lorsque la performance ne dépasse pas une performance de référence prédéfinie.

9. La méthode selon une des revendications 1 à 8,
**caractérisée par** la force électromotrice du moteur (32) pour l'élément de transmission (36) étant saisie au début de la phase initiale et par la mesure a) ou/et b) ou/et c) étant prise lorsque la force électromotrice dépasse une valeur de référence.
